# EUROPEAN PATENT APPLICATION

(11) **EP 3 756 902 A1**
(43) Date of publication of application: **30.12.2020**
(21) Application number: 20179640.6
(22) Date of filing: 12.06.2020
(51) Int. Cl.: B41M 5/00, B41J 11/00, B41M 7/00, C09D 11/54

(54) **LIQUID COMPOSITION FOR SURFACE TREATMENT, PRINTING METHOD, AND PRINTING DEVICE**

(30) Priority: 24.06.2019 JP 2019116222
(71) Applicant: Ricoh Company, Ltd., Tokyo 143-8555 (JP)
(72) Inventor: NONAKA, Yuutaroh, Tokyo 143-8555 (JP); NAKAGAWA, Tomohiro, Tokyo 143-8555 (JP); HAGIWARA, Hiroki, Tokyo 143-8555 (JP); UMEMURA, Kazuhiko, Tokyo 143-8555 (JP); FUJITA, Yuusuke, Tokyo 143-8555 (JP); TERAI, Nozomi, Tokyo 143-8555 (JP)
(74) Representative: White, Duncan Rohan

(57) **Abstract**

A liquid composition for surface treatment includes a nonionic resin particle, and a multivalent metal salt, wherein the contact angle of water against a film of the liquid composition is 15 or less degrees.

## Description

### BACKGROUND

### Technical Field

The present invention relates to a liquid composition for surface treatment, a printing method, and a printing device.

### Description of the Related Art

Since inkjet printers are relatively quiet, have low running costs, and are capable of printing color images with ease, they are now widely used at home to output digital information. Inkjet technologies for forming images on various packing materials for food, beverages, commodities, and other items are developed and applied for industrial as well as home settings.

Also, non-absorptive recording media such as plastic film are used as print substrates. Because ink does not permeate or dry on such non-absorptive recording media, ink droplets excessively spread over the non-absorptive media, which makes the color boundary of images obscure. A technology for applying a processing fluid containing a flocculant to non-absorptive recording media before applying ink containing a coloring material thereto was developed to address this issue. An ink set containing a liquid composition for surface treatment containing a flocculant is disclosed in JP-2018-94902-A1.

However, this color blurring at boundaries is not sufficiently reduced when inkjet printing is conducted onto a non-absorptive recording medium using the technology disclosed in JP-2018-94902-A1 mentioned above. In general, the amount of the ink present on a recording medium should be reduced by decreasing the amount of the ink droplets to improve the drying of the ink. However, this prevents dots from sufficiently spreading over the recording medium, which results in streaking.

### SUMMARY

According to embodiments of the present disclosure, a liquid composition for surface treatment for print substrates is provided with which blurring and streaking can be sufficiently reduced.

According to embodiments of the present disclosure, provided is a liquid composition for surface treatment includes a nonionic resin particle, and a multivalent metal salt, wherein the contact angle of water against a film of the liquid composition is 15 or less degrees.

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
FIG. 1 is a diagram illustrating a perspective view of an example of an inkjet recording device;
FIG. 2 is a diagram illustrating a perspective view of an example of a tank of an inkjet recording device;
FIG. 3 is a schematic diagram illustrating another example of the inkjet recording device according to another embodiment of the present disclosure; and.
FIG. 4 is a schematic diagram illustrating a pre-processing fluid application device of the pre-processing unit illustrated in FIG. 3.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Embodiments of the present disclosure are described in detail below.

The liquid composition for surface treatment of the present disclosure is used for surface treatment of a print substrate and contains a nonionic resin particle and multivalent metal salt. The contact angle of water against film of the liquid composition for surface treatment is 15 or less degrees.

### Liquid Composition for Surface Treatment

The liquid composition for surface treatment of the present disclosure contains nonionic resin particles, a multivalent metal salt, and substantially no coloring material. "Substantially containing no coloring material" means that no coloring material is actively added as a component of the liquid composition for surface treatment (hereinafter simply referred to as liquid composition).

The present inventors formulated the present disclosure based on the knowledge that, for a liquid composition containing a nonionic resin particle and multivalent metal salt, the settings of the contact angle of water against film of the liquid composition to 15 or less degrees sufficiently reduce blurring and streaking.

### Nonionic Resin Particle

The nonionic resin particle for use in the present disclosure is dispersible without using a charge.

The nonionic resin particle for use in the present disclosure means a resin particle from which no monomer having an acidic functional group such as a carboxyl group or sulfo group or a basic functional group such as an amino group is detected by thermal decomposition gas chromatography mass spectroscopy analysis (GC-MS) (for example, GC-17A, manufactured by SHIMADZU CORPORATION) after a solid content is isolated from the liquid composition for surface treatment by centrifugal separation.

The chemical structure of the nonionic resin particle is not particularly limited. Resin particles which can be nonion-dispersed can be used. At least one member selected from the group consisting of a polyolefin resin, polyvinyl acetate resin, polyvinyl chloride resin, urethane resin, styrene butadiene resin, and a copolymer of any combination of these resins is preferable because such resins or a copolymer imparts strong attachability to various substrates. Copolymer here means a resin copolymerized from a monomer constituting each homopolymer mentioned above and another polymer which does not adversely affect the present application. Ethylene-vinyl acetate copolymerized resins, ethylene-vinyl acetate-vinyl chloride copolymerized resins, or olefin-modified urethane resins are more preferable.

The glass transition temperature of the nonionic resin particle is preferably from -30 to 30 degrees C and more preferably from -25 to 25 degrees C.

When the Tg is -30 or higher degrees C, resin film becomes sufficiently tough and a layer (prior-applied layer) of the liquid composition for surface treatment on a print substrate becomes stronger. When the Tg is 30 or lower degrees C, filming property of a resin is enhanced and flexibility is sufficiently secured, thereby enhancing attachability to a substrate. It is preferable that the nonionic resin particle be at least one member selected from the group consisting of a polyolefin resin, a polyvinyl acetate resin, a polyvinyl chloride resin, a urethane resin, a styrene butadiene resin, and a copolymer of these resins. Such resin particles prevent color blurring.

Nonionic resin particles dispersed in water as a dispersion medium can be mixed with a material such as an organic solvent. The liquid composition for surface treatment is prepared through such mixing. It is possible to use suitable synthetic acrylic resin particles as the nonionic resin particle. Alternatively, the resin particle available on the market can be used.

The average particle diameter of the nonionic resin particle is, for example, from 10 to 400 nm and preferably from 20 to 300 nm.

The proportion of the nonionic resin particle in a solid form of the total content of the liquid composition is preferably from 0.5 to 20 percent by mass and more preferably from 3 to 20 percent by mass.

When the proportion is 0.5 or more percent by mass, the resin sufficiently covers a substrate, thereby enhancing attachability. When the proportion is 20 or lower percent by mass, attachability does not deteriorate because layers do not become excessively thick.

### Multivalent Metal Salt

The liquid composition for surface treatment of the present disclosure contains a multivalent metal salt.

The multivalent metal salt causes the coloring material in an ink to quickly agglomerate after the ink droplets reaches a recording medium, thereby reducing color bleeding and enhancing coloring.

The multivalent metal salt is not particularly limited. Examples include, but are not limited to, salts (multi-valent metal salts) of titanium, chromium, copper, cobalt, strontium, barium, iron, aluminum, calcium, magnesium, and nickel.

Of these multi-valent metal salts, at least one member selected from the group consisting of calcium salts, magnesium salts, nickel salts, and aluminum salts is preferable to effectively aggregate pigments. Alkali earth metal salts such as calcium salts and magnesium salts are more preferable.

Incidentally, ionic multivalent metal salts are preferable. In particular, calcium salts of the multivalent metal salts further stabilize reaction liquid.

Specific examples of the multi-valent metal salt include, but are not limited to, calcium carbonate, calcium nitrate, calcium chloride, calcium acetate, calcium sulfate, magnesium chloride, magnesium acetate, magnesium sulfate, barium sulfate, zinc sulfide, zinc carbonate, aluminum silicate, calcium silicate, silica gel magnesium, and aluminum hydroxide.

Of these, calcium acetate is preferable, which prevents deterioration of strength of prior-applied layers attributable to deliquesce.

The concentration of the multivalent metal salt to the entire of the liquid composition is preferably from 0.05 to 0.5 mol/kg. Within this concentration range, particularly excellent storage stability is imparted and color bleeding is reduced.

The contact angle of water against film of the liquid composition for surface treatment of the present disclosure is required to be 15 or less degrees C. When the contact angle surpasses 15 degrees, it is not possible to sufficiently reduce blurring and streaking. The contact angle is more preferably 12 or less degrees.

The contact angle of water against film of the liquid composition for surface treatment of the present disclosure can be adjusted to 15 or less degrees by a method such as a method of adjusting the contact angle of water against film of a nonionic resin particle or a method of adjusting types and amounts of organic solvents.

For example, when the contact angle of water against film of a nonionic resin particle is adjusted to 80 or less degrees or preferably 75 or less degrees and types and amounts of organic solvents to be added are adjusted, the contact angle of water against film of the liquid composition for surface treatment of the present disclosure can be adjusted to 15 or less degrees.

The organic solvents specified in the paragraphs of Ink and Examples described below can be used as the organic solvent for use in the liquid composition for surface treatment.

The amount of the organic solvent added to the liquid composition for surface treatment is, for example, from 10 to 70 percent by mass and preferably from 20 to 60 percent by mass.

The liquid composition for surface treatment may optionally furthermore contain various types of additives such as a foaming agent.

The contact angle is measured by an instrument such as a contact angle meter (DMo-601, manufactured by Kyowa Interface Science Co., LTD, or P-60, manufactured by MEIWAFOSIS CO., LTD). The detailed measuring conditions of contact angle are described in Examples described later.

### Ink

The organic solvent, water, coloring material, resins, and additives for use in the ink are described below.

### Organic Solvent

There is no specific limitation to the organic solvent for use in the present disclosure. For example, a water-soluble organic solvent can be used. Examples include, but are not limited to, polyols, ethers such as polyol alkylethers and polyol arylethers, nitrogen-containing heterocyclic compounds, amides, amines, and sulfur-containing compounds.

Specific examples of the water-soluble organic solvents include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkylethers such as ethylene glycol monoethylether, ethylene glycol monobutyl ether, diethylene glycol monomethylether, diethylene glycol monoethylether, diethylene glycol monobutyl ether, tetraethylene glycol monomethylether, and propylene glycol monoethylether; polyol arylethers such as ethylene glycol monophenylether and ethylene glycol monobenzylether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propioneamide, and 3-buthoxy-N,N-dimethyl propioneamide; amines such as monoethanolamine, diethanolamine, and triethylamine; sulfur-containing compounds such as dimethyl sulfoxide, sulfolane, and thiodiethanol; propylene carbonate, and ethylene carbonate.

It is preferable to use an organic solvent having a boiling point of 250 degrees C or lower to serve as a humectant and impart a good drying property.

Polyol compounds having eight or more carbon atoms and glycol ether compounds are also suitable. Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyol alkylethers such as ethyleneglycol monoethylether, ethyleneglycol monobutylether, diethyleneglycol monomethylether, diethyleneglycol monoethylether, diethyleneglycol monobutylether, tetraethyleneglycol monomethylether, and propyleneglycol monoethylether; and polyol arylethers such as ethyleneglycol monophenylether and ethyleneglycol monobenzylether.

The polyhydric alcohol compounds having eight or more carbon atoms and glycolether compounds enhance permeability of ink for paper used as a recording medium.

The proportion of the organic solvent in the ink has no particular limit and can be suitably selected to suit to a particular application.

In terms of drying property and discharging reliability of the ink, the proportion is preferably from 10 to 60 percent by mass and more preferably from 20 to 60 percent by mass.

### Water

The proportion of water of the ink is not particularly limited and can be suitably selected to suit to a particular application. For example, in terms of enhancing the drying property and discharging reliability of the ink, the proportion is preferably from 10 to 90 percent by mass and more preferably from 20 to 60 percent by mass.

### Coloring Material

The ink for use in the present disclosure is not particularly limited. For example, white ink and/or non-white ink can be used.

ISO-2469 (JIS-8148) can be used as the criteria of the whiteness of white ink. In general, a material having a value of 70 or greater can be used as a white coloring material. White particles having hollow structures for use in white ink include hollow resin particles and hollow inorganic particles. The resin composition of such hollow resin particles include, but are not limited to, acrylic-based resins such as acrylic resins, styrene-acrylic resins, crosslinking styrene-acrylic resins, urethane-based resins, and maleic-based resins.

Specific examples of the material of such hollow inorganic particles include, but are not limited to, oxides, nitrides, oxynitrides of metal such as silicone, aluminum, titanium, strontium, and zirconium, and inorganic compounds such as various types of glasses and silica.

The non-white ink includes color ink, black ink, gray ink, metallic ink, and other inks. The clear ink means ink mainly including a resin particle, organic solvent, and water without a colorant.

Specific examples of the color ink include, but are not limited to, cyan ink, magenta ink, yellow ink, light cyan ink, light magenta ink, red ink, green ink, blue ink, orange ink, and violet ink.

There is no specific limitation to the coloring material for use in the non-white ink as long as it shows non-white color. It can be suitably selected to suit to a particular application. For example, dyes and pigments are suitable. These can be used alone or in combination. Of these, pigments are preferable.

Examples of the pigment include, but are not limited to, organic pigments and inorganic pigments.

As the inorganic pigments, titanium oxide, iron oxide, calcium oxide, barium sulfate, aluminum hydroxide, barium yellow, cadmium red, and chrome yellow, carbon black manufactured by known methods such as contact methods, furnace methods, and thermal methods can be used. These can be used alone or in combination.

Also, hollow resin particles and hollow inorganic particles can be used.

Of those pigments, pigments having good affinity with solvents are preferable.

Specific examples of the organic pigment for black include, but are not limited to, carbon black (C.I. Pigment Black 7) such as furnace black, lamp black, acetylene black, and channel black, copper, iron (C.I. Pigment Black 11), and organic pigments such as aniline black (C.I. Pigment Black 1). These can be used alone or in combination.

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, and 155; C.I. Pigment Orange 5, 13, 16, 17, 36, 43, and 51; C.I. Pigment Red 1, 2, 3, 5, 17, 22, 23, 31, 38, 48:2, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 185, 190, 193, 209, and 219; C.I. Pigment Violet 1 (Rohdamine Lake), 3, 5:1, 16, 19, 23, and 38; C.I. Pigment Blue 1, 2, 15 (Phthalocyanine Blue), 15:1, 15:2, 15:3 (Phthalocyanine Blue), 16, 17:1, 56, 60, and 63; and C.I. Pigment Green 1, 4, 7, 8, 10, 17, 18, and 36. These can be used alone or in combination.

Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35. These can be used alone or in combination.

Examples of the coloring material for use in metallic ink are fine powder prepared by fine pulmerization of metal, alloyed metal, or a metal compound. Specific examples include, but are not limited to, fine powders obtained by finely-pulverizing metal selected from the group consisting of aluminum, silver, gold, nickel, chrome, tin, zinc, indium, titanium, silicon, copper, and platinum or alloyed metal thereof or an oxide, nitride, sulfide, or carbide of the metal or alloyed metal, and any combination thereof.

The proportion of the coloring material in the ink is preferably from 0.1 to 15 percent by mass and more preferably from 1 to 10 percent by mass in terms of enhancement of image density, fixability, and discharging stability.

To obtain an ink by pigment dispersion, for example, a hydrophilic functional group is introduced into a pigment to prepare a self-dispersible pigment, the surface of a pigment is coated with a resin followed by dispersion, or a dispersant is used to disperse a pigment.

To prepare a self-dispersible pigment by introducing a hydrophilic functional group into a pigment, for example, it is possible to add a functional group such as a sulfone group and a carboxyl group to the pigment (e.g., carbon) to disperse the pigment in water.

To coat the surface of a pigment with a resin, the pigment is encapsulated by microcapsules to make the pigment dispersible in water. This can be referred to as a resin-coated pigment. In this case, all the pigments to be added to ink are not necessarily entirely coated with a resin. Pigments partially or wholly uncovered with a resin are allowed to be dispersed in the ink unless such pigments have an adverse impact.

A known dispersant of a small molecular weight or a large molecular weight, which is represented by a surfactant, can be used to disperse the coloring material in the white ink.

As the dispersant, it is possible to use, for example, an anionic surfactant, a cationic surfactant, a nonionic surfactant, an amphoteric surfactant, etc. depending on a pigment.

Also, a nonionic surfactant (RT-100, manufactured by TAKEMOTO OIL & FAT CO., LTD.) and a formalin condensate of naphthalene sodium sulfonate are suitable as the dispersant. Those can be used alone or in combination.

### Pigment Dispersion

It is possible to obtain an ink by mixing a coloring material with a material such as water and an organic solvent. It is also possible to mix a pigment with water, a dispersant, and other substances to prepare a pigment dispersion and thereafter mix the pigment dispersion with material such as water and an organic solvent to manufacture ink.

The pigment dispersion can be obtained by dispersing water, a pigment, a pigment dispersant, and other optional components and adjusting the particle size. It is good to use a dispersing device for dispersion.

The particle diameter of the pigment in the pigment dispersion has no particular limit. For example, the average particle diameter of the non-white pigment is preferably from 30 to 110 nm. Within this range, dispersion stability and discharging stability of the pigment are enhanced and image quality such as image density ameliorates. In addition, the mean volume diameter of such hollow resin particles is preferably from 200 to 1,000 nm. Within this range, excellent dispersion stability and degree of whiteness are achieved. The mean volume diameter of such hollow inorganic particles is preferably from 10 to 200 nm. Within this range, excellent dispersion stability and degree of whiteness are achieved. The particle diameter of the pigment can be analyzed using a particle size analyzer (Nanotrac Wave-UT151, manufactured by MicrotracBEL Corp).

In addition, the proportion of the pigment in the pigment dispersion is not particularly limited and can be suitably selected to suit a particular application. In terms of improving discharging stability and image density, the proportion is preferably from 0.1 to 50 percent by mass and more preferably from 0.1 to 30 percent by mass.

It is preferable that the pigment dispersion be filtered with an instrument such as filter and a centrifuge to remove coarse particles followed by deaerateing.

### Resin

The type of the resin contained in the ink has no particular limit and can be suitably selected to suit to a particular application. Examples include, but are not limited to, urethane resins, polyester resins, acrylic-based resins, vinyl acetate-based resins, styrene-based resins, butadiene-based resins, styrene-butadiene-based resins, vinylchloride-based resins, acrylic styrene-based resins, and acrylic silicone-based resins.

Resin particles made of such resins can be also used. It is possible to mix a resin emulsion in which such resin particles are dispersed in water as a dispersion medium with materials such as a coloring material and an organic solvent to obtain an ink. It is possible to use any suitable-synthetic resin particles as the resin particle. Alternatively, the resin particle available on the market can be used. These resin particulates can be used alone or in combination.

The mean volume diameter (volume average particle diameter) of the resin particle is not particularly limited and can be suitably selected to suit to a particular application. The mean volume diameter is preferably from 10 to 1,000 nm, more preferably from 10 to 200 nm, and particularly preferably from 10 to 100 nm to obtain good fixability and image robustness.

The volume average particle diameter can be measured by using, for example, a particle size analyzer (Nanotrac Wave-UT151, manufactured by MicrotracBEL Corp.).

The proportion of the resin in the ink is not particularly limited and can be suitably selected to suit to a particular application. In terms of fixability and storage stability of the ink, it is preferably from 1 to 30 percent by mass and more preferably from 5 to 20 percent by mass of the total amount of the ink.

The particle diameter of the solid portion in the ink has no particular limit and can be suitably selected to suit to a particular application. For example, the maximum frequency in the maximum number conversion is preferably from 20 to 1,000 nm and more preferably from 20 to 150 nm to ameliorate the discharging stability and image quality such as image density. The solid portion includes resin particulate, pigment particulate, etc. The particle diameter can be measured by using a particle size analyzer (Nanotrac Wave-UT151, manufactured by MicrotracBEL Corp).

### Additive

The ink may further optionally include a surfactant, a defoaming agent, a preservative and fungicide, a corrosion inhibitor, a pH regulator, etc.

### Surfactant

Examples of the surfactant are silicone-based surfactants, fluorochemical surfactants, amphoteric surfactants, nonionic surfactants, anionic surfactants, etc.

The silicone-based surfactant has no specific limit and can be suitably selected to suit to a particular application. Of these, surfactants not soluble in a high pH environment are preferable. Examples of the silicone-based surfactants include, but are not limited to, side chain modified polydimethyl siloxane, both terminal-modified polydimethyl siloxane, one-terminal-modified polydimethyl siloxane, and side-chain-both-terminal-modified polydimethyl siloxane. In particular, silicone-based surfactants having a polyoxyethylene group or a polyoxyethylene polyoxypropylene group as a modification group are particularly preferable because such an aqueous surfactant demonstrates good properties. It is possible to use a polyether-modified silicone-based surfactant as the silicone-based surfactant. A specific example is a compound in which a polyalkylene oxide structure is introduced into the side chain of the Si site of dimethyl silooxane.

Specific examples of the fluorochemical surfactant include, but are not limited to, perfluoroalkyl sulfonic acid compounds, perfluoroalkyl carboxylic acid compounds, ester compounds of perfluoroalkyl phosphoric acid, adducts of perfluoroalkyl ethylene oxide, and polyoxyalkylene ether polymer compounds having a perfluoroalkyl ether group in its side chain. These are particularly preferable because the fluorochemical surfactant does not readily produce foams.

Specific examples of the perfluoroalkyl sulfonic acid compounds include, but are not limited to, perfluoroalkyl sulfonic acid and salts of perfluoroalkyl sulfonic acid. Specific examples of the perfluoroalkyl carbonic acid compounds include, but are not limited to, perfluoroalkyl carbonic acid and salts of perfluoroalkyl carbonic acid.

Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain, and salts of polyoxyalkylene ether polymers having a perfluoroalkyl ether group in its side chain. Counter ions of salts in these fluorochemical surfactants are, for example, Li, Na, K, NH₄, NH₃CH₂CH₂OH, NH₂(CH₂CH₂OH)₂, and NH(CH₂CH₂OH)₃.

Specific examples of the ampholytic surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

The silicone-based surfactant has no particular limit and can be suitably selected to suit to a particular application. Specific examples include, but are not limited to, side-chain-modified polydimethyl siloxane, both distal-end-modified polydimethyl siloxane, one-distal-end-modified polydimethyl siloxane, and side-chain-both-distal-end-modified polydimethyl siloxane. In particular, a polyether-modified silicone-based surfactant having a polyoxyethylene group or a polyoxyethylene polyoxypropylene group is particularly preferable because such a surfactant demonstrates good property as an aqueous surfactant.

Any suitable synthetic surfactant and any product available on the market is suitable. Products available on the market can be obtained from BYK Chemie GmbH, Shin-Etsu Silicone Co., Ltd., Dow Corning Toray Co., Ltd., etc., NIHON EMULSION Co., Ltd., Kyoeisha Chemical Co., Ltd., and others.

The polyether-modified silicon-based surfactant has no particular limit and can be suitably selected to suit to a particular application. For example, a compound is usable in which the polyalkylene oxide structure represented by the following Chemical formula S-1 is introduced into the side chain of the Si site of dimethyl polysiloxane.

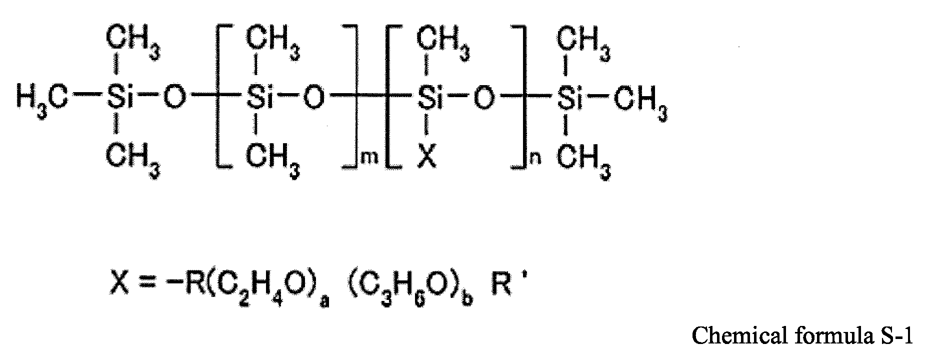

In Chemical formula S-1, "m", "n", "a", and "b" each, respectively independently represent integers, R represents an alkylene group, and R' represents an alkyl group.

Specific examples of the polyether-modified silicone-based surfactant include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Co., Ltd.), BYK-33 and BYK-387 (both manufactured by BYK Chemie GmbH), and TSF4440, TSF4452, and TSF4453 (all manufactured by Momentive Performance Materials Inc.).

A fluorochemical surfactant in which the number of carbon atoms replaced with fluorine atoms is 2 to 16 is preferable and, 4 to 16, more preferable.

Specific examples of the fluorochemical surfactant include, but are not limited to, perfluoroalkyl phosphoric acid ester compounds, adducts of perfluoroalkyl with ethylene oxide, and polyoxyalkylene ether polymer compounds having a perfluoroalkyl ether group in its side chain. Of these, polyoxyalkylene ether polymer compounds having a perfluoroalkyl ether group in the side chain thereof are preferable because these polymer compounds do not easily foam and the fluorosurfactant represented by the following Chemical formula F-1 or Chemical formula F-2 is more preferable.

CF₃CF₂(CF₂CF₂)ₘ-CH₂CH₂O(CH₂CH₂O)ₙ H Chemical formula F-1

In the Chemical formula F-1, "m" is preferably 0 or an integer of from 1 to 10 and "n" is preferably 0 or an integer of from 1 to 40.

CₙF₂ₙ₊₁-CH₂CH(OH)CH₂-O-(CH₂CH₂O)ₐ-Y Chemical formula F-2

In the compound represented by the Chemical formula F-2, Y represents H, CₘF₂ₘ₊₁, where m represents an integer of from 1 to 6, CH₂CH(OH)CH₂-CₘF₂ₘ₊₁, where m represents an integer of from 4 to 6, or CₚH₂ₚ₊₁, where p is an integer of from 1 to 19. "n" represents an integer of from 1 to 6. "a" represents an integer of from 4 to 14.

As the fluorochemical surfactant, products available on the market may be used. Specific examples include, but are not limited to, SURFLON S-111, S-112, S-113, S-121, S-131, S-132, S-141, and S-145 (all manufactured by ASAHI GLASS CO., LTD.); FLUORAD FC-93, FC-95, FC-98, FC-129, FC-135, FC-170C, FC-430, and FC-431 (all manufactured by SUMITOMO 3M); MEGAFACE F-470, F-1405, and F-474 (all manufactured by DIC CORPORATION); ZONYL TBS, FSP, FSA, FSN-100, FSN, FSO-100, FSO, FS-300, UR, and Capstone™ FS-30, FS-31, FS-3100, FS-34, and FS-35 (all manufactured by The Chemours Company); FT-110, FT-250, FT-251, FT-400S, FT-150, and FT-400SW (all manufactured by NEOS COMPANY LIMITED); POLYFOX PF-136A, PF-156A, PF-151N, PF-154, and PF-159 (manufactured by OMNOVA SOLUTIONS INC.); and UNIDYNE™ DSN-403N (manufactured by DAIKIN INDUSTRIES, Ltd.). Of these, in terms of improvement on print quality, in particular coloring property and permeability, wettability, and uniform dying property on paper, FS-3100, FS-34, and FS-300 of The Chemours Company, FT-110, FT-250, FT-251, FT-400S, FT-150, and FT-400SW of NEOS COMPANY LIMITED, POLYFOX PF-151N of OMNOVA SOLUTIONS INC., and UNIDYNE™, DSN-403N (manufactured by DAIKIN INDUSTRIES, Ltd.) are particularly preferable.

The proportion of the surfactant in the ink is not particularly limited and can be suitably selected to suit to a particular application. For example, the proportion is preferably from 0.001 to 5 percent by mass and more preferably from 0.05 to 5 percent by mass in terms of excellent wettability and discharging stability and improvement on image quality.

### Defoaming Agent

The defoaming agent has no particular limit and examples thereof include, bt are not limited to silicon-based defoaming agents, polyether-based defoaming agents, and aliphatic acid ester-based defoaming agents. These can be used alone or in combination. Of these, silicone-based defoaming agents are preferable in terms of the effect of breaking foams.

### Preservatives and Fungicides

The preservatives and fungicides are not particularly limited. A specific example is 1,2-benzisothiazoline-3-one.

### Corrosion Inhibitor

The corrosion inhibitor has no particular limitation. Specific examples include, but are not limited to, acid sulfites and sodium thiosulfates.

### pH Regulator

The pH regulator has no particular limit as long as it can control pH to be not lower than 7. Specific examples include, but are not limited to, amines such as diethanol amine and triethanol amine.

Properties of the ink are not particularly limited and can be suitably selected to suit to a particular application. For example, viscosity, surface tension, and pH are preferable in the following ranges.

Viscosity of the ink at 25 degrees C is preferably from 5 to 30 mPa·s and more preferably from 5 to 25 mPa·s because print density and text quality improve and good dischargeability is demonstrated. Viscosity can be measured by, for example, a rotatory viscometer (RE-80L, manufactured by TOKI SANGYO CO., LTD.). The measuring conditions are as follows:
- Standard cone rotor (1°34' × R24)
- Sample liquid amount: 1.2 mL
- Number of rotations: 50 rotations per minute (rpm)
- 25 degrees C
- Measuring time: three minutes.

The surface tension of the ink is preferably 35 mN/m or less and more preferably 32 mN/m or less at 25 degrees C because the ink suitably levels on a recording medium and the drying time of the ink is shortened.

pH of the ink is preferably from 7 to 12 and more preferably from 8 to 11 in terms of prevention of corrosion of metal parts in contact with liquid.

### Print Substrate

The print substrate for use in the present disclosure is not particularly limited. Plain paper, gloss paper, special paper, cloth, and others can b e used. In particular, non-permeating substrate is preferable.

The non-permeating substrate in the present disclosure has a surface with poor moisture permeability, absorbency, and/or adsorptive property and includes a material having many hollow spaces inside that are not open to the outside.

To be more quantitative, the substrate has a water-absorbency of 10 or less mL/m²between the initiation of contact and 30 msec^{1/2} thereafter according to Bristow's method.

Ink attachability of such non-permeating substrates, in particular, polypropylene film, polyethylene terephthalate film, and nylon film is enhanced by using the liquid composition for surface treatment.

Specific examples of the polypropylene film include, but are not limited to, P-2002, P-2161, P-4166, all manufactured by TOYOBO CO., LTD., PA-20, PA-30, and PA-20W, all manufactured by SunTox Co., Ltd., and FOA, FOS, and FOR, all manufactured by FUTAMURA CHEMICAL CO., LTD.

Specific examples of the polyethylene terephthalate film include, but are not limited to, E-5100 and E-5102, both manufactured by TOYOBO CO., LTD., P60 and P375, both manufactured by Toray Industries, Inc., and G2, G2P2, K, and SL, all manufactured by Teijin Dupont Film Japan Limited.

Specific examples of the nylon film include, but are not limited to, HARDEN film N-1100, N-1102, and N-1200, all manufactured by TOYOBO CO., LTD., and ON, NX, MS, and NK, all manufactured by UNITIKA LTD.

It is preferable to heat the ink of the present disclosure after printing because residual solvent in the ink film is reduced so that attachability to substrate is further enhanced.

### Printing Method and Printing Device

The printing method of the present disclosure includes applying the liquid composition for surface treatment of the present disclosure to a print substrate and applying an ink containing a coloring material to the print substrate. The ink containing a coloring material can be applied by methods such as inkjet printing, spraying, roller printing, and stencil printing. Of these, inkjet printing is preferable because on-demand printing is possible for a small lot.

The printing device of the present disclosure includes a first applicator configured to apply the liquid composition for surface treatment to a print substrate and a second applicator configured to apply an ink containing a coloring material to the print substrate. The second applicator of applying an ink containing a coloring material includes a device for discharging an ink, a device for spraying application, a device for roller coating, a device for stencil printing, and other devices. The second applicator is preferably a device for discharging an ink.

Specific examples will be described below.

### Surface Reforming

The printing method of the present disclosure preferably includes surface reforming.

For the surface reforming, it is possible to use any treatment method that can reduce non-uniform application of a liquid composition during application and enhance attachability. It includes treatments such as corona treatment, streamer treatment, atmospheric pressure plasma treatment, flame treatment, ultraviolet radiation treatment, and others.

The surface of a print substrate can be reformed by using a known device that executes such treatment methods.

Of these treatment methods, treatment applying corona or streamer discharging to a recording surface is preferable to reform a recording surface. In comparison with atmospheric pressure plasma treatment, flame treatment, ultraviolet radiation treatment, the power output of corona discharging is further stable and the recording surface is uniformly surface-treated.

### Recording Device and Recording Method

The ink of the present disclosure can be suitably used for various recording devices employing an inkjet recording method, such as printers, facsimile machines, photocopiers, multifunction peripherals (serving as a printer, a facsimile machine, and a photocopier), and solid freeform fabrication devices (3D printers, additive manufacturing devices).

In the present disclosure, the recording device and the recording method respectively represent a device capable of discharging ink and liquids such as various processing liquids to a recording medium and a method of recording utilizing such a device. The recording medium means an article to which ink or various processing fluids can be temporarily or permanently attached.

The recording device may further optionally include a device relating to feeding, conveying, and ejecting a recording medium and other devices such as a pre-processing device and a post-processing device in addition to the head portion that discharges the ink.

The recording device and the recording method may further optionally include a heater for use in the heating process and a drier for use in the drying process. For example, the heating device and the drying device include devices including heating and drying the print surface of a recording medium and the opposite surface thereof. The heating device and the drying device are not particularly limited. For example, a fan heater and an infra-red heater can be used. Heating and drying can be conducted before, in the middle of, or after printing.

In addition, the recording device and the recording method are not limited to those producing meaningful visible images such as texts and figures with ink. For example, the recording method and the recording device capable of producing patterns like geometric design and 3D images are included.

In addition, the recording device includes both a serial type device in which the liquid discharging head is caused to move and a line type device in which the liquid discharging head is not moved, unless otherwise specified.

Furthermore, in addition to the desktop type, this recording device includes a device capable of printing images on a wide recording medium such as A0 and a continuous printer capable of using continuous paper rolled up in a roll form as recording media.

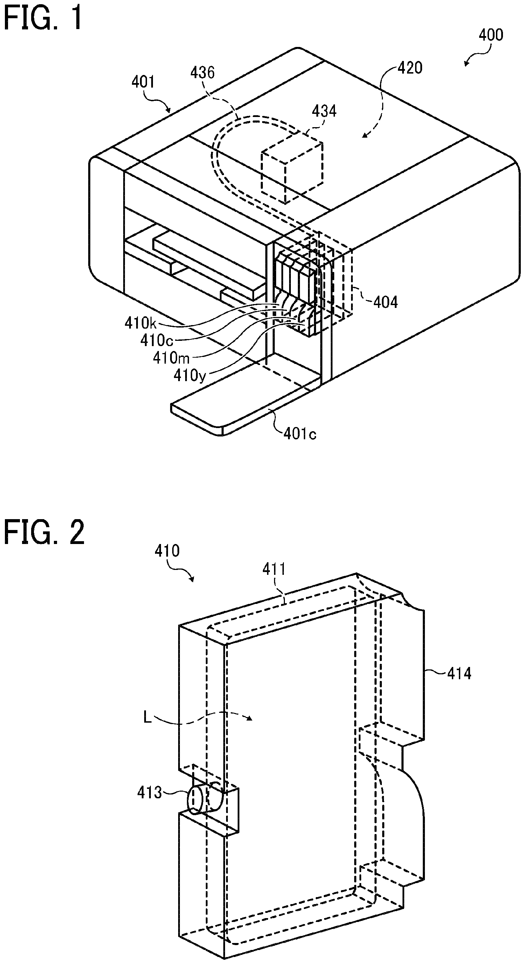

The recording (print) device is described using an example with reference to FIG. 1 and FIG. 2. FIG. 1 is a diagram illustrating a perspective view of the recording device. FIG. 2 is a diagram illustrating a perspective view of a tank. An image forming apparatus 400 as an embodiment of the recording device is a serial type image forming apparatus. A mechanical unit 420 is disposed in an exterior 401 of the image forming apparatus 400. Each ink accommodating unit (ink container) 411 of each tank 410 (410k, 410c, 410m, and 410y) for each color of black (K), cyan (C), magenta (M), and yellow (Y) is made of a packaging member such as aluminum laminate film. The ink accommodating unit 411 is housed in, for example, a plastic container housing unit 414 and L represents liquid contained in the ink accommodating unit 411. As a result, the tank 410 is used as an ink cartridge of each color.

A cartridge holder 404 is disposed on the rear side of the opening when a cover 401c is opened. The cartridge holder 404 is detachably attached to the tank 410. As a result, each ink discharging outlet 413 of the tank 410 communicates with a discharging head 434 for each color via a supplying tube 436 for each color so that the ink can be discharged from the discharging head 434 to a recording medium.

This recording device may include not only a portion to discharge ink but also a device referred to as a pre-processing device and a post-processing device.

As an example of the pre-processing device and the post-processing device, like the ink of black (K), cyan (C), magenta (M), and yellow (Y) ink, the pre-processing device and the post-processing device may further include a liquid accommodating unit including a pre-processing liquid or a post-processing liquid and a liquid discharging head to discharge the pre-processing liquid or the post-processing liquid according to an inkjet printing method.

As another example of the pre-processing device and the post-processing device, it is suitable to dispose a pre-processing device and a post-processing device not employing the inkjet printing method but a blade coating method, a roll coating method, or a spray coating method.

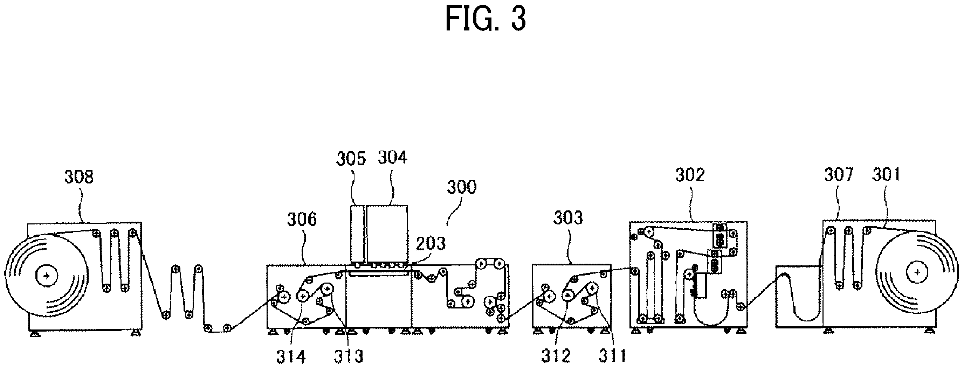

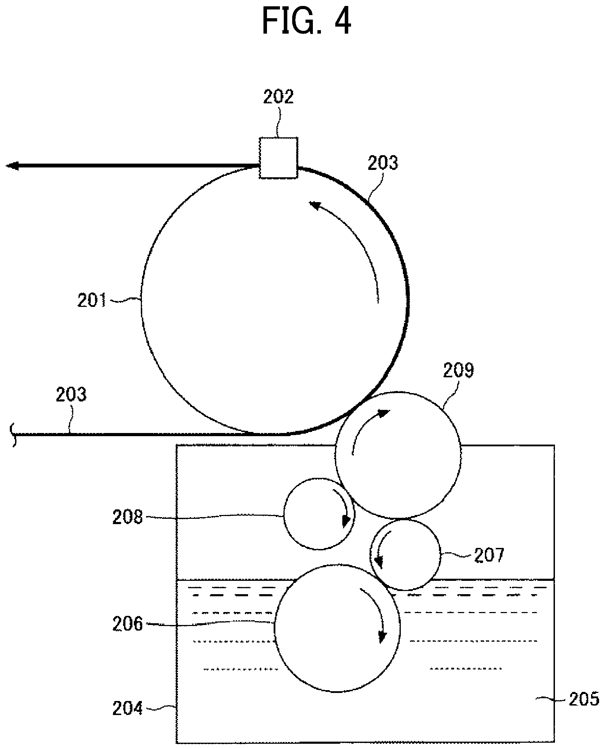

Next, the image forming device including the pre-processing fluid application device illustrated in FIG. 3 and the pre-processing fluid application device of the pre-processing unit illustrated in FIG. 4 are described.

An image forming apparatus (printing device) 300 illustrated in FIG. 3 includes a recording medium transfer unit 301, a pre-processing unit 302 to apply a pre-processing fluid to a recording medium 203, a drying unit 303 to dry the recording medium 203 to which the pre-processing fluid is already applied, an inkjet recording unit (second applicator) 304 to form an image on the dried recording medium 203 by discharging an aqueous pigment ink thereto, a post-processing unit 305 to apply a post-processing fluid to the recording medium 203 after the image is formed thereon, and a second drying unit 306 to dry the recording medium 203 to which the post-processing fluid is already applied.

The recording medium conveyance unit 301 has a sheet feeder 307, multiple conveyor rollers, and a reeling unit 308.

The recording medium 203, which is continuous roll paper, is reeled out from the sheet feeder 307 by the conveyance rollers, and thereafter reeled up by the reeling unit 308.

The recording medium 203 conveyed from the recording medium conveyance unit 301 is coated with the pre-processing fluid by the pre-processing fluid application unit 204 (illustrated in FIG. 2) of the pre-processing unit 302.

As illustrated in FIG. 4, a pre-processing fluid 205 is accommodated inside the pre-processing fluid application unit (first applicator) 204.

In this unit, a thin film of the pre-processing fluid 205 is formed on the surface of an application roller 209 by a stirring and supplying roller 206, a conveyance roller 207, and a thin film forming roller 208.

Thereafter, the application roller 209 is caused to rotate pressed against a rotatable counter roller 201 which is rotating and the recording medium 203 passes between the application roller 209 and the rotatable counter roller 201. At this nip, the pre-processing fluid 205 is applied to the surface of the recording medium 203.

At this point, a pressure controller 202 adjusts the nip pressure between the counter roller 201 and the application roller 209 to control the application amount of the pre-processing fluid 205.

In addition, it is also possible to adjust the application amount of the pre-processing fluid 205 by controlling the rotation speed of the counter roller 201 and the application roller 209.

The application roller 209 and the counter roller 201 are driven by a power supply such as drive motor. The rotation speed of the application roller 209 and the counter roller 201 can be controlled by adjusting the energy of the power supply.

By using the application roller 209 to apply the pre-processing fluid 205 to the recording area of the recording medium 203, the pre-processing fluid 205 having a relatively high viscosity can be thinly applied to the recording medium 203 to further reduce occurrence of uneven coloring.

The application method in the pre-processing unit 302 is not limited to the roll coating method. Other specific methods are, for example, blade coating method, gravure coating method, gravure offset coating method, bar code method, and roll coating method.

The pre-processing fluid 205 can be applied to the entire recording area of the recording medium 203 or only the area to which an image is formed.

The recording medium 203 to which the pre-processing fluid 205 is already applied is dried by heat rollers 311 and 312 of the drying unit 303.

This unit conveys the recording medium 203 to which the pre-processing fluid 205 is applied to the heat rollers 311 and 312 by the conveyance rollers.

The heat rollers 311 and 312 are heated to high temperatures from 50 to 100 degrees C. The moisture of the recording medium 203 to which the pre-processing fluid 205 is already applied evaporates by contact heat transfer from the heat rollers 311 and 312 so that the recording medium 203 becomes dry.

The drying unit in the first drying unit 303 is not limited to a heat roller. Other examples are an infra red drier, a microwave drier, a heat wind drier. These can be used alone or in combination.

Optionally, it is also possible to heat the recording medium 203 before the pre-processing fluid 205 is applied.

On the thus-dried recording medium 203, an image is formed by the inkjet recording unit 304 in accordance with image data.

The inkjet recording unit 304 is a full-line type head including four inkjet heads 304K, 304C, 304M, and 304Y of black K, cyan C, magenta M, and yellow Y, respectively, arranged in this order from upstream of the conveyance direction of the recording medium 203.

A single or multiple nozzle arrays are allowable.

The other heads 304C, 304M, and 304Y have the same configurations and the four inkjet heads 304K, 304C, 304M, and 304Y are arranged along the conveyance direction spaced the same distance therebetween.

For this reason, an image can be formed on the whole width of the entire recording area by a single recording operation.

Optionally, a post-processing fluid is applied by the post-processing unit 305 to the recording medium 203 on which an image is formed.

The post-processing fluid forms a transparent protection layer on the recording medium 203 on which the image is formed.

The post-processing fluid can be applied to the entire recording area of the recording medium 203 or only the area to which the image is formed.

The recording medium 203 on which an image is formed or the recording medium 203 to which the post-processing fluid is applied is dried by heat rollers 313 and 314 of the second drying unit 306 in the same manner as in the first drying unit 303.

The dried recording medium 203 is reeled up by the reeling unit 308.

It is optional to provide a prior-to-reeling drying unit to dry the recording medium 203 before the recording medium 203 is reeled up by the reeling unit 308.

Terms such as image forming, recording, printing, and print used in the present disclosure represent the same meaning.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, embodiments of the present disclosure are described in detail with reference to Examples but not limited thereto. In Examples, part means part by mass. Unless otherwise specified, synthesis, preparation of the inks and the liquid composition for surface treatment, and evaluation were performed under the conditions of room temperature of 25 degrees C and humidity of 60 percent.

Measuring of Contact Angle of Water against Film of Liquid Composition for Surface Treatment

A liquid composition for surface treatment was applied to a polyethylene (PET) film (ESPET® E5100, manufactured by TOYOBO CO., LTD.) using a bar coater No. 2 followed by drying at 80 degrees C for two minutes. Thereafter, the contact angle of water was measured. The thickness of the dried film of the liquid composition for surface treatment was set to 100 nm. The amount of water added dropwise when measuring the contact angle of water was 3.0 µL and the contact angle was measured 10 seconds after water was added dropwise.

The contact angle of water against film was measured by DMo-601, manufactured by Kyowa Interface Science Co., LTD.

### Measuring of Contact Angle of Water against Film of Nonionic Resin Particle

A resin emulsion was applied to a PET film (ESPET® E5100, manufactured by TOYOBO CO., LTD.) using a bar coater No. 2 followed by drying at 80 degrees C for two minutes. Thereafter, the contact angle of water was measured. The measuring conditions of the contact angle was the same as for Measuring of Contact Angle of Water against Film of Liquid Composition for Surface Treatment.

### Preparation of Pigment Dispersion

### Preparation of Black Pigment Dispersion

A total of 100 g of carbon black (SEAST SP, SRF-LS, manufactured by TOKAI CARBON CO., LTD.) was added to 3,000 mL of 2.5 normal sodium hypochlorite solution followed by stirring at 300 rpm at 60 degrees C. Subsequent to reaction for ten hours for oxidation treatment, a pigment in which a carboxylic acid group was applied to the surface of carbon black was obtained.

The reaction liquid was filtered and the thus-filtered carbon black was neutralized with sodium hydroxide solution followed by ultra-filtering.

Thereafter, the resulting pigment dispersion and deionized water were subject to ultra filtration by dialysis membrane followed by ultrasonic dispersion so that black pigment dispersion having a pigment solid content concentrated to 20 percent having a mean volume diameter of 100 nm was obtained.

### Preparation of White Pigment Dispersion

A total of 25 g of titanium oxide (STR-100W, manufactured by Sakai Chemical Industry Co., Ltd.), 5 g of pigment dispersant (TEGO Dispers 651, manufactured by Evonik Industries AG), and 70 g of water were mixed followed by dispersion using a bead mill (research labo, manufactured by Shinmaru Enterprises Corporation) with 0.3 mm Φ zirconia beads and a filling ratio of 60 percent at 8 m/s for five minutes so that a white pigment dispersion having a mean volume diameter of 285 nm was obtained.

### Preparation of Resin Emulsion S-1

Boncoat CP-6450 (Tg: 42 degrees C, manufactured by DIC Corporation) was used as the acrylic resin emulsion S-1.

### Preparation of Resin Emulsion R-1

### Preparation of Urethane Resin Emulsion A

A total of 1.4 mol of dicyclohexyl methane diisocyanate, 0.1 mol of diisocyanate compound obtained by reaction of 1 mol of a trimer of isocyanulate of 1,6-hexamethylene diisocyanate and 1/3 mol of polyethylene glycol monomethyl ether having a molecular weight of 1,000, and N-methyl-2-pyrrolidone at 15 percent of the total mass were loaded to 1 mol of 1,6-hexane diol in a reaction flask for reaction at 90 degrees C for two hours in a nitrogen atmosphere so that a prepolymer was obtained. A total of 450 g of the resulting prepolymer having a solid content of 85 percent was added dropwise over 15 minutes to 600 g of water in which 0.2 g of silicone-based defoaming agent (SE-21, manufactured by Wacker Asahikasei Silicone Co., Ltd.) was dissolved. Subsequent to stirring at 25 degrees C for 10 minutes, the compound represented by the Chemical Structure 1, ethylenediamine, and adipic acid dihydrazide were added dropwise so that a polyurethane resin emulsion A (Resin emulsion R-1) was obtained.

H₂N-C₃H₆-Si-(OC₂H₅)₃ Chemical Structure 1

### Preparation of Resin Emulsion R-2

A 1 L flask A and flask B each equipped with a stirrer, a thermometer, a nitrogen gas introducing tube, and a reflux tube were prepared, 89 parts of deionized water was charged in the flask A, and the temperature was raised to 70 degrees C while introducing nitrogen. Moreover, the following aqueous solution was loaded.

| | |
|---|---|
| • 10 percent AQUALON HS-10 aqueous solution: | 3.0 parts |
| • 5 percent ammonium persulfate aqueous solution: | 2.6 parts |

The following recipe was mixed in the flask B by a homomixer so that an emulsion was obtained.

| | |
|---|---|
| • Methyl methacrylate: | 38.9 parts |
| • Acrylic acid2-ethylhexyl: | 49.6 parts |
| • Polyalkylene glycol monomethacrylate (n = 23) (BLEMMER® PME-1000, manufactured by NOF CORPORATION: | 4.0 parts |
| • Vinyl triethoxysilane: | 7.5 parts |
| • AQUALON HS-10: | 1.5 parts |
| • Deionized water: | 42.9 parts |

Thereafter, the emulsion in the flask B was continuously added dropwise to the flask A over 2.5 hours. In addition, 1.6 parts of an aqueous solution of ammonium persulfate at 5 percent by mass was added every hour until three hours had passed since the initiation of addition dropwise. Subsequent to two-hour aging at 70 degrees C after the addition dropwise, the resulting liquid was cooled down to adjust pH to 7 to 8 by 28 percent ammonium water so that an acrylic resin emulsion A (Resin emulsion R-2) containing nonionic resin particles was obtained.

### Preparation of Resin Emulsion R-3

### Preparation of Urethane Resin Emulsion B

A total of 1.0 mol of dicyclohexylmethane diisocyanate, 0.5 mol of diisocyanate compound obtained by reaction of 1 mol of a trimer of isocyanulate of 1,6-hexamethylene diisocyanate and 1/3 mol of polyethylene glycol monomethyl ether having a molecular weight of 1,000, and N-methyl-2-pyrrolidone at 15 percent of the total mass were loaded to 1 mol of 1,6-hexanediol in a reaction flask for reaction at 90 degrees C for two hours in a nitrogen atmosphere so that a prepolymer was obtained. A total of 450 g of the thus-obtained prepolymer having a solid content of 85 percent was added dropwise over 15 minutes to 600 g of water in which 0.2 g of silicone-based defoaming agent (SE-21, manufactured by Wacker Asahikasei Silicone Co., Ltd.) was dissolved. Subsequent to stirring at 25 degrees C for 10 minutes, the compound represented by the Chemical Structure 1, ethylenediamine, and adipic acid dihydrazide were added dropwise so that a polyurethane resin emulsion B (Resin emulsion R-3) was obtained.

### Preparation of Resin Emulsion R-4

### Preparation of Acrylic Resin Emulsion B

A 1 L flask A and flask B each equipped with a stirrer, a thermometer, a nitrogen gas introducing tube, and a reflux tube were prepared, 89 parts of deionized water was charged in the flask A, and the temperature was raised to 70 degrees C while introducing nitrogen. Moreover, the following aqueous solution was loaded.

| | |
|---|---|
| • 10 percent AQUALON HS-10 aqueous solution: | 3.0 parts |
| • 5 percent ammonium persulfate aqueous solution: | 2.6 parts |

The following recipe was mixed in the flask B by a homomixer so that an emulsion was obtained.

| | |
|---|---|
| • Methyl methacrylate: | 38.9 parts |
| • Acrylic acid2-ethylhexyl: | 45.6 parts |
| • Polyalkylene glycol monomethacrylate (n = 23) (BLEMMER® PME-1000, manufactured by NOF CORPORATION: | 8.0 parts |
| • Vinyl triethoxysilane: | 7.5 parts |
| • AQUALON HS-10: | 1.5 parts |
| • Deionized water: | 42.9 parts |

Thereafter, the emulsion in the flask B was continuously added dropwise to the flask A over 2.5 hours. In addition, 1.6 parts of an aqueous solution of ammonium persulfate at 5 percent by mass was added every hour until three hours had passed since the initiation of addition dropwise. Subsequent to two-hour aging at 70 degrees C after the addition dropwise, the resulting liquid was cooled down to adjust pH to 7 to 8 by 28 percent ammonium water so that an acrylic resin emulsion B (Resin emulsion R-4) was obtained.

### Preparation Example of Ink

Ink was prepared by mixing and stirring the formulation shown in Table 1 and non-white ink (black ink) was filtered by a 0.2 µm polypropylene filter and white ink was filtered by a 0.5 µm polypropylene filter.

The surfactant shown below was used. The values in Table are represented in addition ratio (percent by mass).

### • FS-300 (fluorochemical surfactant, manufactured by E.I. du Pont de Nemours and Company)

**Table 1**

| Component | Ink 1 | Ink 2 |
|---|---|---|
| Resin emulsion S-1 (solid mass) | 10.0 | 10.0 |
| Black pigment dispersion (solid mass) | 5.0 | - |
| White pigment dispersion (solid mass) | - | 8.0 |
| Propylene glycol | 30.0 | 30.0 |
| Diethylene glycol monobutyl ether | 5.0 | 5.0 |
| FS-300 | 0.5 | 0.5 |
| Water | Balance | Balance |

### Preparation of Liquid Composition for Surface Treatment

### Preparation of Liquid Compositions 1 to 11 for Surface Treatment

Each component shown in Table 2 was mixed and stirred followed by filtering by a 5 µm filter (Minisart®, manufactured by Sartorius Stedim Biotech GmbH) so that liquid compositions 1 to 11 for surface treatment were prepared. The values in Table are represented in addition ratio (percent by mass).

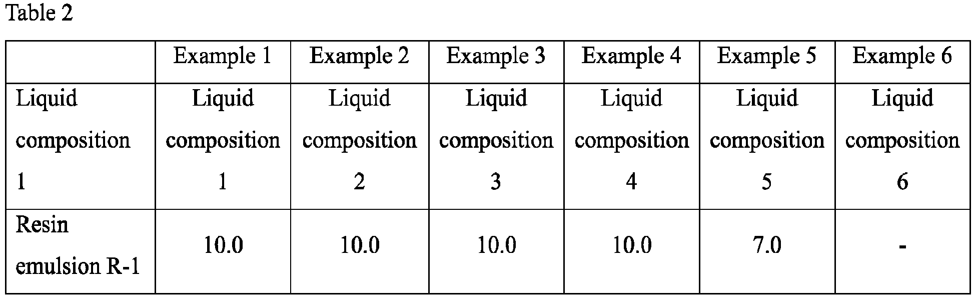

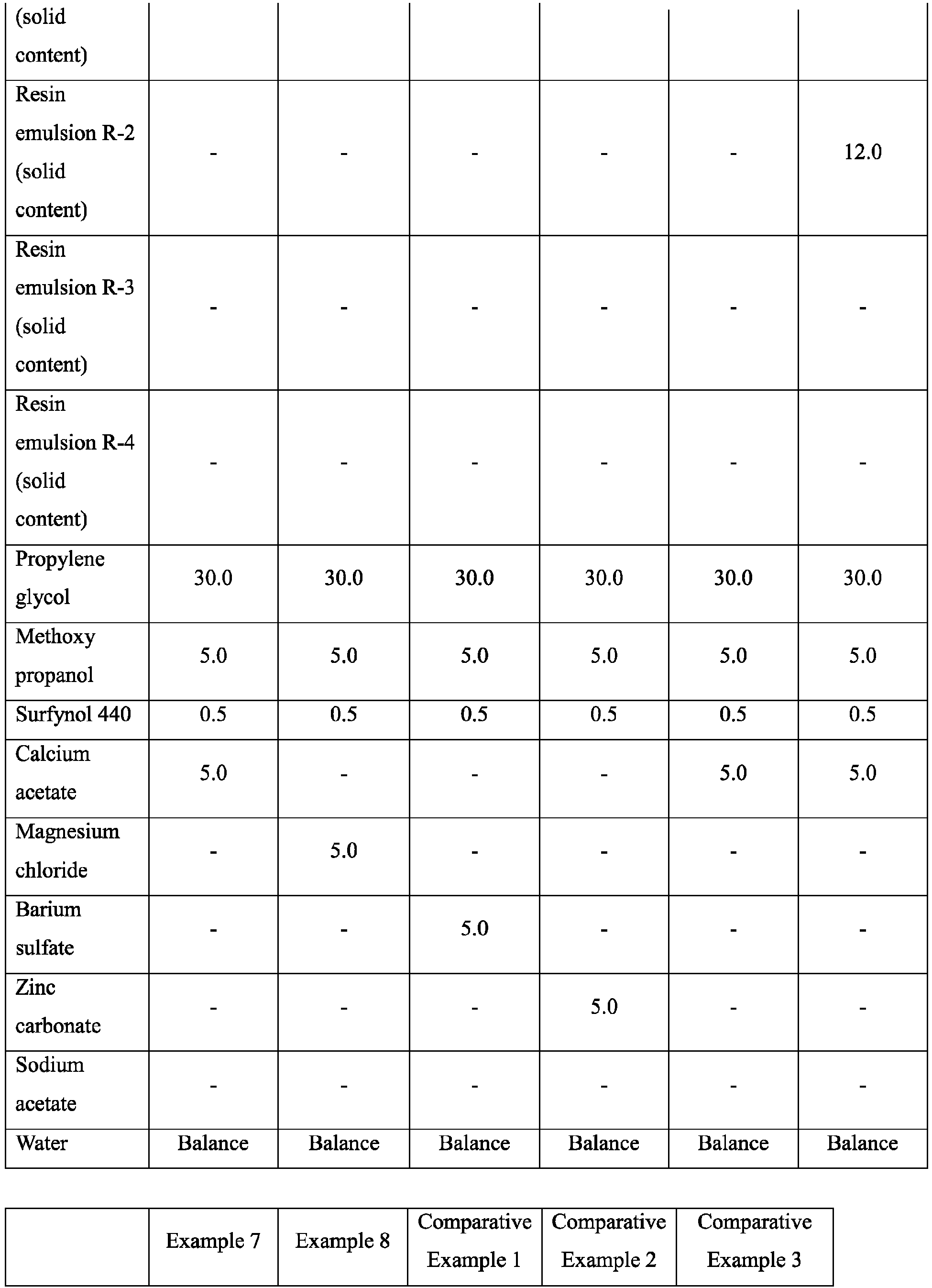

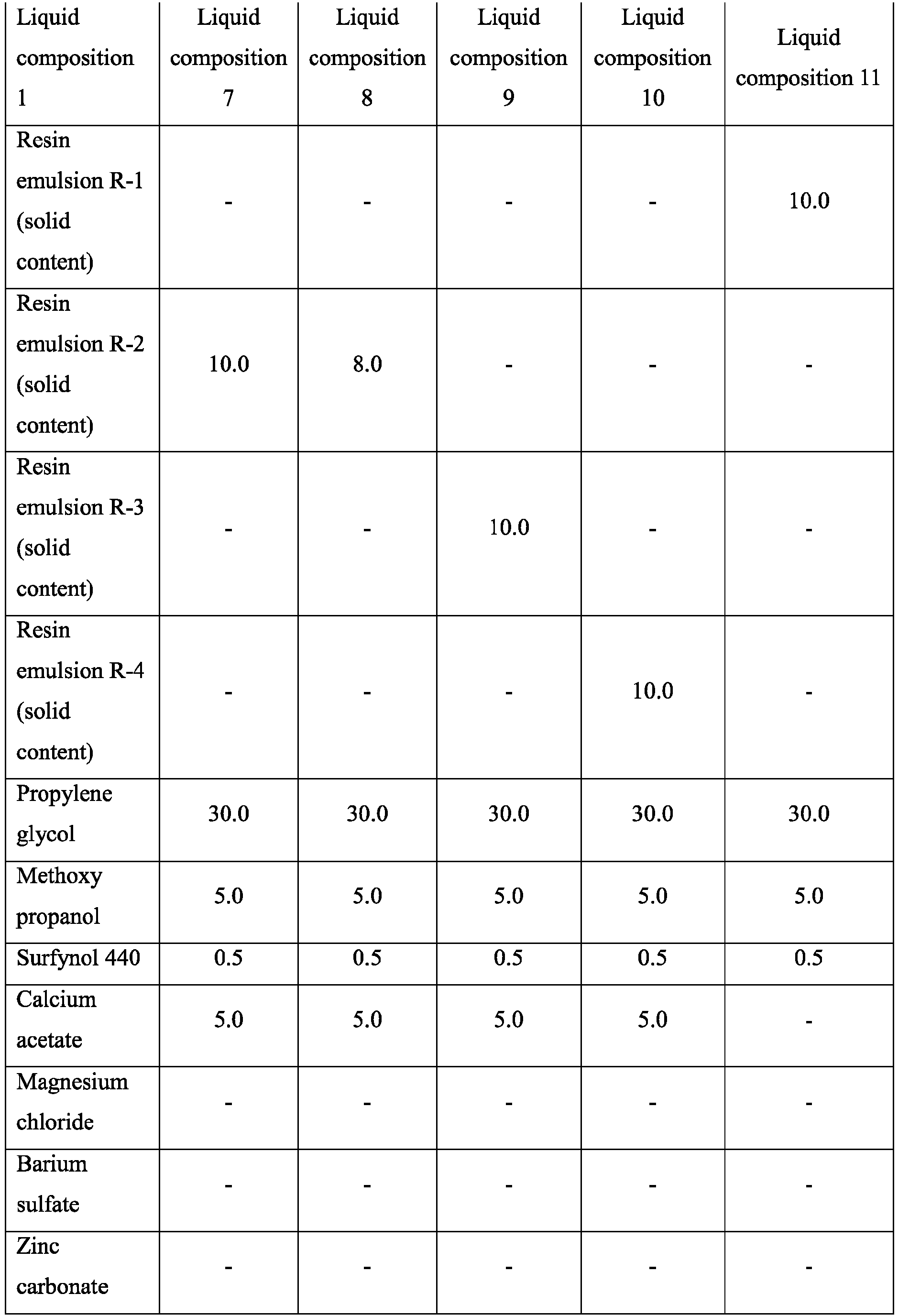

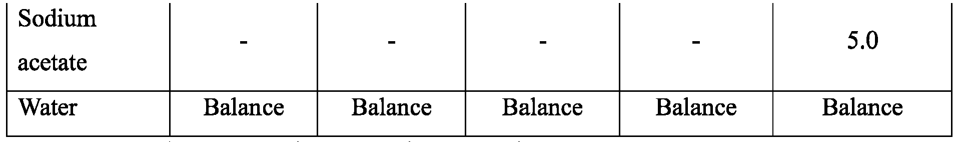

### Examples 1 to 8 and Comparative Examples 1 to 3

### Image Forming

Liquid compositions 1 to 11 for surface treatment were applied to recording media and thereafter the ink 1 and ink 2 were applied in this consequence. The images recorded on the recording media were evaluated.

The liquid compositions 1 to 11 for surface treatment were applied by a bar coater No. 2 and the ink 1 and the ink 2 were applied by an inkjet printer (IPSIO GXe 5500, manufactured by Ricoh Co., Ltd.)

The amount attached to the liquid compositions 1 to 11 for surface treatment was 0.4 mg/cm². PET film was used as the recording medium.

The output images were evaluated as follows:

### Evaluation on Streaking

A white ink solid image was printed on a black ink solid image smaller than the white ink solid image and streaking on the black ink solid image were subject to evaluation.
A: No streaking
B: Streaking slightly present
C: Streaking significantly present

### Evaluation on Blurring

A white ink solid image was printed on a black ink solid image smaller than the white ink solid image and blurring on the black ink solid image were subject to evaluation.
A: No blurring present
B: Blurring slightly present
C: Blurring significantly present

The results are shown in Table 3.

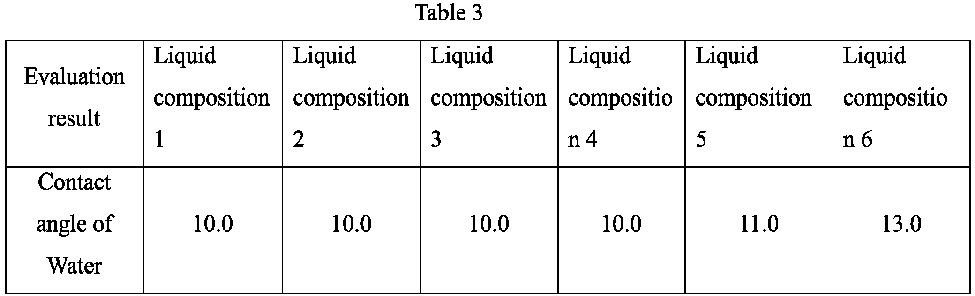

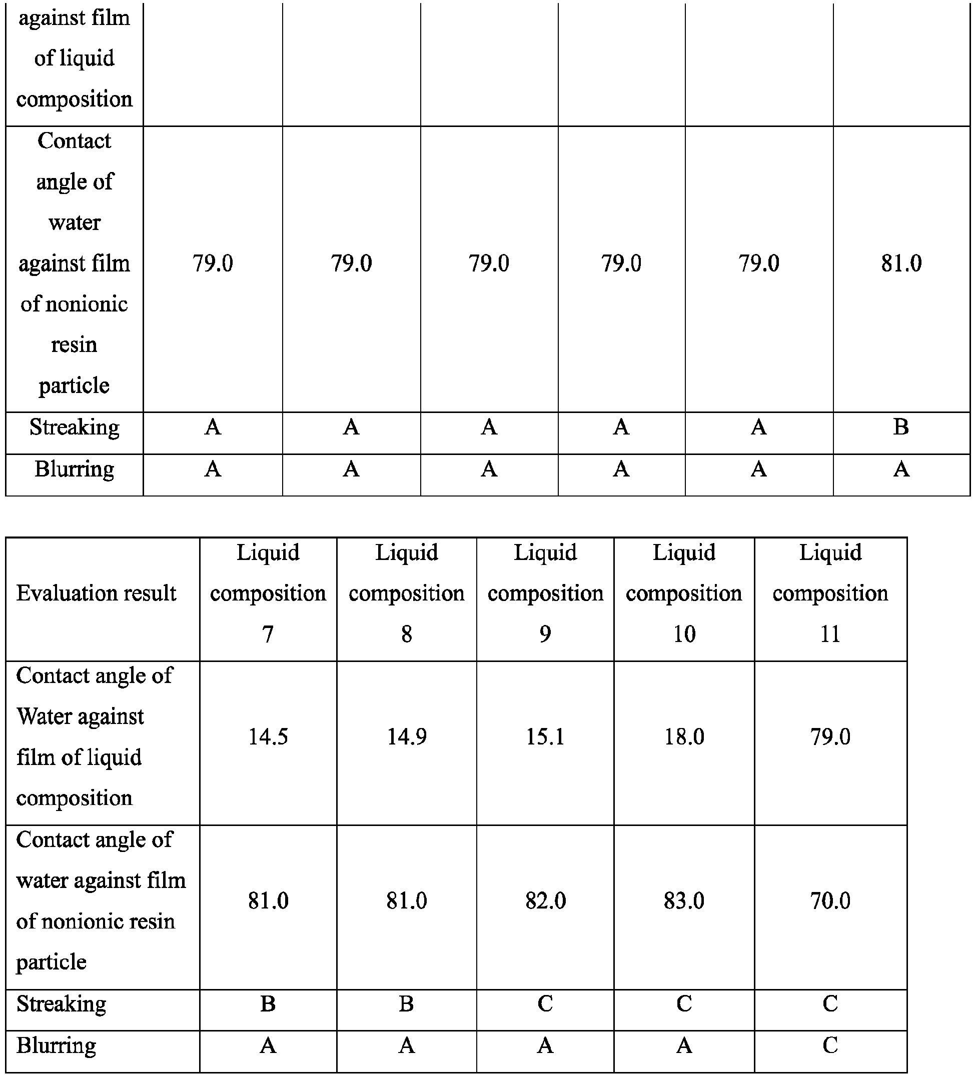

As seen in the result shown in Table 3, the liquid compositions of each Example sufficiently reduce blurring and streaking.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

## Claims

1. A liquid composition for surface treatment comprising:
a nonionic resin particle; and
a multivalent metal salt,
wherein a contact angle of water against a film of the liquid composition is 15 or less degrees.

2. The liquid composition according to claim 1,
wherein the nonionic resin particle comprises at least one member selected from the group consisting of a polyolefin resin, polyvinyl acetate resin, polyvinyl chloride resin, urethane resin, styrene butadiene resin, and a copolymer thereof.

3. The liquid composition according to claim 1 or 2,
wherein a contact angle of water against a film of the nonionic resin particle is 80 or less degrees.

4. The liquid composition according to any one of claims 1 to 3,
wherein the multivalent metal salt comprises a member selected from the group consisting of a calcium salt, magnesium salt, nickel salt, and aluminum salt.

5. A printing method comprising:
applying the liquid composition for surface treatment of any one of claims 1 to 4 to a print substrate; and
applying an ink comprising a coloring material to the print substrate.

6. The printing method according to claim 5, wherein the applying an ink includes at least one of applying a white ink and applying a non-white ink.

7. A printing device (300) comprising:
a first applicator (204) configured to apply the liquid composition for surface treatment of any one of claims 1 to 4 to a print substrate; and
a second applicator (304) configured to apply an ink comprising a coloring material to the print substrate.

8. The printing device (300) according to claim 7, wherein the second applicator (304) discharges the ink.
